(19) **Europäisches Patentamt / European Patent Office / Office européen des brevets**

(11) **EP 4 663 024 A1**

(12) **EUROPEAN PATENT APPLICATION**
published in accordance with Art. 153(4) EPC

(43) Date of publication:
**17.12.2025  Bulletin 2025/51**

(21) Application number: **24753290.6**

(22) Date of filing: **05.02.2024**

(51) International Patent Classification (IPC):
**A23F 5/24** (2006.01)   **A23L 2/00** (2006.01)
**A23L 2/38** (2021.01)   **A23L 2/52** (2006.01)

(52) Cooperative Patent Classification (CPC):
**A23F 5/24; A23L 2/00; A23L 2/38; A23L 2/52**

(86) International application number:
**PCT/JP2024/003634**

(87) International publication number:
**WO 2024/166847 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.02.2023  JP 2023015944**

(71) Applicant: **Suntory Holdings Limited
Osaka-shi, Osaka 530-8203 (JP)**

(72) Inventors:
• **SUGINO, Ryosuke
  Kawasaki-shi, Kanagawa 211-0067 (JP)**
• **ISHII, Tomoki
  Kawasaki-shi, Kanagawa 211-0067 (JP)**

(74) Representative: **Vossius & Partner
Patentanwälte Rechtsanwälte mbB
Siebertstrasse 3
81675 München (DE)**

(54) **THERMALLY STERILIZED MILK-CONTAINING COFFEE BEVERAGE**

(57)    Provided is a thermally sterilized milk-containing coffee beverage in which thermal deterioration odors are reduced while containing milk components and coffee lipids. This thermally sterilized milk-containing coffee beverage contains milk components, coffee lipids, and inorganic salts including a magnesium salt. In the thermally sterilized milk-containing coffee beverage, the total content of kahweol palmitate and cafestol palmitate (coffee lipids) is 0.01-1.30 mg /100 g, and the magnesium content is 0.5-8.0 mg /100 g.

**EP 4 663 024 A1**

**Description**

TECHNICAL FIELD

The present invention relates to a thermally sterilized milk-containing coffee beverage with reduced thermal deterioration odor.

BACKGROUND ART

Milk-containing coffee beverages are beverages with high preference which are drunk throughout the year, and many milk-containing coffee beverages filled in containers and capable of long-term storage at ambient temperature are commercially distributed. For example, in the case of a milk-containing coffee beverage can, a common manufacturing process of milk-containing coffee beverages consists of "roasting", "grinding", "brewing", "blending", "filtration", "filling", "can seaming", "sterilization", "cooling" and "box packing". In this manufacturing process, "sterilization" is an important process in terms of quality, and thus heating at 125 °C for about 20 minutes is usually conducted for a 190 g can (PTL 1).

One of the major problems of milk-containing coffee beverages has been that peculiar sliminess and unclear flavor are generated after thermal sterilization, and fresh milk feeling and original flavor of coffee are impaired. Therefore, various methods for reducing deteriorated odor and unpleasant taste associated with heating of milk-containing coffee beverages have been suggested. For example, a milk-containing coffee beverage having reduced bad aftertaste after thermal sterilization, i.e., reduced peculiar sliminess and miscellaneous taste felt after drinking, and reduced unclearness after drinking, characterized in that a ratio of whey protein relative to whole milk protein in the beverage is reduced (PTL 2), the container-filled coffee having refreshing aftertaste after drinking characterized in that vegetable oil and fat is added in a ratio of 0.15 to 2 relative to 1 part by weight of milk fat in the beverage (PTL 3), and a manufacturing method of a milk or milk product having suppressed formation of milk-heated odor characterized in that $\alpha$-glycosyl trehalose is included in the milk or milk product and the milk or milk product is manufactured through a thermal treatment process (PTL 4) can be exemplified.

Further, since milk-containing coffee beverages prepared using coffee raw materials containing cafestol and kahweol which are lipids specific to coffee have even stronger heated odor, manufacturing of the thermally sterilized milk-containing coffee beverage using coffee raw materials with reduced coffee lipids has been suggested as well (PTL 5).

CITATION LIST

PATENT LITERATURE

PTL 1: JP 2002-186425A
PTL 2: JP 2010-57435A
PTL 3: JP 2009-291137A
PTL 4: JP 2006-94856A
PTL 5: WO2015/030253

SUMMARY OF INVENTION

TECHNICAL PROBLEM

Coffee lipids are closely related to odor and thus sometimes referred to as aroma oil.

The object of the present invention is to provide a thermally sterilized milk-containing coffee beverage having reduced thermal deterioration odor while containing milk components and coffee lipids.

SOLUTION TO PROBLEM

As a result of earnest investigation to solve the above problem, the present inventors have found that thermal deterioration odor of a thermally sterilized milk-containing coffee beverage which contains coffee lipids can be reduced by adding inorganic salts including a small amount of a magnesium salt to the beverage, and finally completed the present invention.

That is, the present invention relates to the following:

[1] A thermally sterilized milk-containing coffee beverage containing milk components and coffee lipids, wherein the coffee beverage satisfies the following (i) and (ii):

(i) the coffee lipid is kahweol palmitate and/or cafestol palmitate, and the total content of kahweol palmitate and cafestol palmitate in the beverage is 0.01 to 1.30 mg /100 g; and
(ii) the coffee beverage further includes inorganic salts including a magnesium salt, and a content of magnesium in the beverage is 0.5 to 8.0 mg /100 g.

[2] The coffee beverage according to [1], wherein the coffee beverage further satisfies at least one of the following (iii) and (iv):

(iii) the inorganic salts further include a potassium salt, and potassium content in the beverage is 30 to 150 mg /100 g,
(iv) the inorganic salts further include a chloride, and chloride ion content in the beverage is 5 to 50 mg /100 g.

[3] The coffee beverage according to [1] or [2], wherein protein content in the beverage is 0.1 to 2.0 g /100 g.

ADVANTAGEOUS EFFECTS OF INVENTION

The present invention makes it possible to provide a milk-containing coffee beverage capable of long-term storage which has effectively reduced thermal deterioration odor and has natural taste and flavor of coffee and milk. The beverage of the present invention is advantageous in that it can be manufactured by the simple method in which inorganic salts used as food additives are added to the beverage in a small amount.

DESCRIPTION OF EMBODIMENTS

(Coffee beverage)

"Coffee beverage" as used herein refers to a beverage product manufactured using a coffee component as a raw material via a thermal sterilization process. Although the type of the product is not particularly limited, "coffee" (including 5 g or more of coffee bean extracts or effluents in terms of coffee raw beans per 100 g of the beverage), or "coffee beverage" (including 2.5 g or more to less than 5 g of coffee bean extract or effluent in terms of coffee raw beans per 100 g of the beverage) defined by "Fair competition code related to labeling of coffee beverage etc." certified in 1977 by Japan fair trade conference can be exemplified as specific beverage. Preferably the beverage of the present invention is not a "coffee-containing soft drink" (including 1 g or more to less than 2.5 g of coffee bean extract or effluent in terms of coffee raw beans per 100 g of the beverage) nor a "coffee-containing carbonated drink" (including 1 g or more of coffee bean extract or effluent in terms of coffee raw beans per 100 g of the beverage, and press-injected with carbon dioxide) defined by the same code.
Even in the case of a beverage including a coffee component as a raw material, a beverage including 3.0 mass% or more of milk solid is dealt as a "milk beverage" under "Fair competition code related to labeling of milk beverage." Such a milk beverage including 3.0 mass% or more of milk solid and including a coffee component as a raw material is also encompassed in the coffee beverage of the present invention.

(Coffee component)

A coffee component refers to a component extracted or eluted from coffee beans and including a coffee beans-derived component, for example, a coffee extract, i.e. a solution obtained by subjecting roasted and ground coffee beans to extraction using water or hot water is exemplified. Also, a solution prepared by diluting a coffee essence obtained from a concentrated coffee extract or instant coffee obtained from dried coffee extract etc. with water or hot water into an appropriate amount is exemplified as a coffee component.

(Milk component)

Herein, a coffee beverage manufactured via a thermal sterilization process using a milk component as a raw material in addition to a coffee component is represented as "milk-containing coffee beverage". A milk component refers to a component added to a beverage for imparting milk flavor and milk feeling to the coffee beverage. As the milk component used in the present invention, usual various milks can be used without particular limitation. For example, animal milks such as cow milk, ewe milk and goat milk, plant milks such as soy bean milk and almond milk are exemplified, and these can be used alone or in combination of two or more. Among these, according to "Ministerial ordinance concerning compositional standards etc. for milk and milk products (December 27, 1951)" for example, animal milks are classified into raw milk, cow milk, special milk, raw goat milk, sterilized goat milk, raw sheep milk, raw buffalo milk, composition-adjusted milk, low fat milk, fat-free milk and processed milk depending on the processing method, and any of them can be used regardless of the types thereof. Furthermore, regarding both animal milks and plant milks, the form of milk is not particularly limited and various types of milks such as whole milk, fermented milk, whey, cream, butter, butter oil, concentrated whey, concentrated milk, concentrated skim milk, unsweetened condensed milk, unsweetened condensed skim milk, sweetened condensed milk, sweetened defatted condensed milk, whole milk powder, powdered skim milk, cream powder, whey powder, butter milk powder, sweetened milk powder, modified milk powder, soy bean powder can be utilized, and also those which is reconstituted from milk powder or concentrated milk can be utilized.

The milk-containing coffee beverage of the present invention contains protein derived from a milk component. Protein derived from a milk component is one of the substances that cause thermal deterioration odor, and it was found that when protein is included in a coffee beverage along with the specific amount of coffee lipid, thermal deterioration odor becomes strongly perceived as a result of influence of these substances on each other. In the present invention, although thermal deterioration odor is likely to be strongly perceived since protein derived from milk components and coffee lipids are both included in the beverage, the beverage having effectively reduced thermal deterioration odor can be provided. The content of protein in the beverage of the present invention is preferably 0.1 g /100 g or more, more preferably 0.2 g /100 g or more, more preferably 0.3 g /100 g or more, even preferably 0.4 g/ 100 g or more. When the content of protein in the beverage is too high, the effects of the present invention become unlikely to be exhibited, and therefore the content of protein in the beverage is preferably 2.0 g /100 g or less, more preferably 1.8 g/100 g or less, even preferably 1.6 g/100 g or less. The content of protein in the beverage can be measured by the analytical method described in the Examples below.

As described below, the beverage of the present invention reduces thermal deterioration odor by using the specific inorganic salts. By reducing thermal deterioration odor, a milk-containing beverage in which fresh milk flavor can be remarkably felt may be obtained. When a component having fresh milk flavor is included in the beverage of the present invention, even more remarkable effects of the present invention can be achieved. Specifically, the beverage includes one or more of δ-dodecalactone and δ-tetradecalactone, and their total content is preferably 2 μg /100 g or more. The total content of δ-dodecalactone and δ-tetradecalactone is more preferably 5 μg /100 g or more, further preferably 10 μg /100 g or more, particularly preferably 12 μg /100 g or more. Though the upper limit is not particularly limited, in terms of providing natural milk flavor, 60 μg /100 g or less is preferable, 55 μg /100 g or less is more preferable, 50 μg /100 g or less is further preferable. δ-dodecalactone and δ-tetradecalactone in the beverage can be measured by gas chromatography mass spectrometry (GC/MS).

The amount and proportion of the coffee component and milk component in the coffee beverage of the present invention are not particularly limited, and can be appropriately determined by taking desired flavor of the milk-containing coffee beverage into consideration. The effects of the present invention are easy to be perceived, usually, when the milk-containing coffee beverage has the solid content derived from a coffee component in the beverage of 0.5 to 2.5 mass% (preferably 0.6 to 2.3 mass%, more preferably 0.7 to 2.0 mass%), and the solid content derived from a milk component of 0.5 to 5.0 mass% (preferably 0.6 to 4.8 mass%, more preferably 0.7 to 4.6 mass%, further preferably 0.8 to 4.5 mass%, or 0.8 to 2.5 mass%). The solid content derived from a coffee component (herein, also expressed as coffee solid content) refers to the weight of a dried solid material obtained by drying the coffee component using a common drying method (freeze-drying, evaporation to dryness etc.) to remove water. The solid content derived from a milk component (herein, also expressed as milk solid content) refers to the total amount of the solids-not-fat and the milk fat content. When plant milk is included as a milk component, it refers to the total amount of the solid content thereof (the weight of dried solid material obtained after removing water from the milk component).

(Coffee lipid)

The coffee beverage of the present invention contains coffee lipids. The "coffee lipid" as used herein refers to (A) kahweol palmitate (abbreviation: KwO-pal) and (B) cafestol palmitate (abbreviation: CfO-pal) which are formed by ester bonding of palmitic acid with kahweol and cafestol respectively and which are measured by the method described in the Examples below. When the content of coffee lipids in a beverage is mentioned, the content refers to the total amount thereof: [(A)+(B)]. These coffee lipids have influence on taste and flavor of coffee and thus these are sometimes referred to as aroma oil, and have an effect on imparting rich and mild mouthfeel to coffee. In the present invention, since coffee lipids are included in the beverage, the milk-containing coffee beverage in which coffee and milk enhance their good properties each other is obtained. The content of the coffee lipids in the coffee beverage of the present invention is 0.01 to 1.30 mg /100 g, preferably 0.02 to 1.20 mg /100 g, more preferably 0.03 to 1.1 0 mg /100 g. The content of coffee lipids can be measured by liquid chromatography-tandem mass spectrometry (LC-MS/MS).

Coffee lipids are included in coffee beans in an amount of about 8 to 16 %. The amount of coffee lipids in a coffee component varies depending on the brewing method of coffee beans. In brewing using a French press or a metal filter, much coffee lipids are extracted into the coffee component, while in brewing using a porous filter such as a paper filter, flannel (cotton) filter, diatom earth, and filter cartridge of polypropylene unwoven fabric, oil is trapped by the filter, and thus the content of coffee lipids in the coffee component becomes lower. In the present invention, by previously analyzing the content of coffee lipids in a coffee component to be used, the beverage containing the specified amount of the coffee lipids can be prepared. Furthermore, it is also possible to separate a coffee component into three phases, i.e. oil component, extraction liquid and extraction residue, using a three-phase centrifugal separator, and adding the appropriate amount of the oil component to the beverage of the present invention as coffee lipids.

(Thermal sterilization)

The coffee beverage of the present invention is a thermally sterilized milk-containing coffee beverage having reduced thermal deterioration odor. Thermal sterilization as used herein refers to a sterilization method in which a liquid formulation containing a coffee component, milk components and inorganic salts is sterilized at a high temperature for short time, then the formulation is filled in a storage container that has undergone sterilization treatment under an aseptic condition (UHT sterilization method), and a retort sterilization method in which a liquid formulation is filled in a storage container such as a can which is then undergo retort treatment. The condition of thermal sterilization may be appropriately selected according to the properties of the formulation liquid of the milk-containing beverage and the storage container to be used, and in the case of UHT sterilization method, usually the condition at 120 to 150 °C for about 1 to 120 seconds, preferably at 130 to 145 °C for about 30 to 120 seconds is selected, while in the case of retort sterilization method, usually the condition at 110 to 130 °C for about 10 to 30 minutes, preferably at 120 to 125 °C for about 10 to 20 minutes is selected.

(Inorganic salt)

The present invention effectively reduces thermal deterioration odor which is remarkably perceived in a thermally sterilized milk-containing coffee beverage containing coffee lipids, by using the specific inorganic salts. Reduction in thermal deterioration odor as used herein includes one or both of suppression of generation of thermal deterioration odor and masking of generated thermal deterioration odor. A milk-containing coffee beverage having reduced thermal deterioration odor means that the thermal deterioration odor is reduced compared to a milk-containing coffee beverage to which any inorganic salt is not added.

"Inorganic salt" as used herein refers to a salt formed from an inorganic acid and an inorganic base. In the present invention, at least one magnesium salt is included as an inorganic salt, and preferably at least one additional potassium salt and/or at least one chloride salt are included. The present inventors have confirmed that a calcium salt does not have the effect of the present invention and that when the content of calcium in a beverage is higher, precipitation and flocculation are likely to occur during storage. Therefore, it is important that said magnesium salt and potassium salt are added in the form of a magnesium salt and potassium salt as food additives exemplified below, not in the form of a mixture of various inorganic salts including salts of various metal elements, for example, various mineral sources including unpurified naturally derived various salts, (for example, mineral (Mg)-containing yeast, mineral water, whey mineral etc.).

Preferable specific examples of the magnesium salt in the present invention include, but not limited to, for example magnesium chloride, magnesium sulphate, magnesium gluconate, magnesium acetate, magnesium citrate, magnesium malate, magnesium L-glutamate etc. that may be used as food additives. Among these, at least one magnesium salt preferably includes magnesium chloride.

Above-described magnesium salts are added so that a content of magnesium in the coffee beverage of the present invention may be 0.5 mg /100 g or more. Since the effect on reduction in thermal deterioration odor according to the present invention is exhibited depending on the content of magnesium salts, magnesium salts are added so that the content of magnesium may be preferably 0.6 mg /100 g or more, more preferably 0.7 mg /100 g or more, further preferably 0.8 mg /100 g or more, particularly preferably 0.9 mg /100 g or more, even more preferably 1.0 mg /100 g or more. The content of magnesium of more than 8.0 mg /100 g is not preferable since the effect on reduction in thermal deterioration odor according to the present invention reaches levelling off and the cost increases. Also, addition of excess amount of a magnesium salt may have an influence on the flavor of a coffee beverage. The upper limit of the content of magnesium in a beverage is 8.0 mg /100 g or less, preferably 6.0 mg /100 g or less, more preferably 5.0 mg /100 g or less, further preferably 4.0 mg /100 g or less, particularly preferably 3.0 mg /100 g or less, even more preferably 2.5 mg /100 g or less. The content of magnesium in a beverage can be measured by inductively coupled plasma emission spectrometry (ICP emission spectrometry).

In a beverage, usually mineral components derived from raw materials such as a milk component exist besides those which have been added as the above-described inorganic salts. In the present invention, magnesium salts may be added so that the content of magnesium in the finally obtained beverage (including both magnesium derived from raw materials and magnesium added as magnesium salts) is within the above-described range. Usually, the amount of magnesium salts to be added is 0.0005 to 0.1 mass%, preferably 0.0008 to 0.08 mass%, more preferably 0.001 to 0.05 mass%, or 0.001 to 0.01 mass% relative to the total amount of the beverage.

As mentioned above, while the effects of the present invention are exhibited depending on the content of magnesium salts, the effects can be effectively achieved when magnesium salts are added so that the ratio of the magnesium content to the protein content [magnesium content (mg)/protein content (g)] in the beverage may be within the specified range. In other words, the effects of the present invention can be effectively exhibited with minimum amount of magnesium salts. The preferable range of magnesium content (mg)/protein content (g) is 1.0 to 7.0, more preferably 1.2 to 6.5, further preferably 1.5 to 6.0.

The coffee beverage of the present invention preferably contains a potassium salt as an inorganic salt, in addition to the above-described magnesium salt. As mentioned above, while the effect of reduction in thermal deterioration odor may reach levelling off in the case of adding a magnesium salt alone, when a potassium salt is used in combination, it acts synergistically with a magnesium salt and thus, thermal deterioration odor can be further reduced compared to the case of a magnesium salt alone. The preferable specific examples of the potassium salt in the present invention include, but not limited to, for example, potassium chloride, potassium phosphate, potassium gluconate, potassium citrate, potassium malate etc. Among these, potassium chloride is preferably included.

The above-mentioned potassium salt is added so that the potassium content in the coffee beverage of the present invention may be 30 mg/100 g or more. Preferably the content may be 50 mg/100 g or more, more preferably 60 mg/100 g or more, further preferably 70 mg/100 g or more. Since the effect of a potassium salt acting synergistically with a magnesium salt may reach levelling off, the upper limit of a potassium salt is preferably 150 mg/100 g or less, more preferably 140 mg/100 g or less, further preferably 130 mg/100 g or less, particularly preferably 120 mg/100 g or less. The potassium content in a beverage can be measured by atomic absorption spectrophotometry.

In a beverage, usually mineral components derived from raw materials such as a milk component exist besides those which have been added as the potassium salt of the above described inorganic salts. In the present invention, potassium salt may be added so that a content of potassium in the finally obtained beverage (including both potassium derived from raw materials and potassium added as a potassium salt) is within the above described range. Usually, the amount of a potassium salt to be added is 0.0005 to 0.1 mass%, preferably 0.0008 to 0.08 mass%, more preferably 0.001 to 0.05 mass%, further preferably 0.002 to 0.03 mass% relative to the total amount of the beverage. In order that synergistic effects may be easily obtained, the mass ratio of the potassium salt to be added to the magnesium salt to be added is preferably about 1 to 15, more preferably 1.5 to 10, further preferably 2 to 8.

Further, a chloride salt is preferably used as an inorganic salt in the beverage of the present invention. Though a milk-containing coffee beverage is likely to generate peculiar sliminess and unclear flavor after thermal sterilization, when a chloride salt is added to a beverage and adjusted so that the chloride ion (Cl⁻) content in the beverage is within the specific range, clearness of aftertaste of the beverage improves, and sliminess and unclear flavor are reduced. Therefore, by adding both magnesium and chloride ions as inorganic salts, the effect on improvement of the aftertaste achieved by chloride ions and the effect on reduction in thermal deterioration odor achieved by magnesium salts synergistically or additively act and can further enhance the flavor of a thermally sterilized milk-containing coffee beverage. Any chloride salt which dissociates into chloride ion in a beverage may be used as the chloride salt in the present invention, for example, chlorides of monovalent metals such as sodium chloride and potassium chloride, chlorides of divalent metals such as magnesium chloride may be exemplified, and among these at least one can be included. Among these, magnesium chloride and potassium chloride are preferable.

The above described chloride salts are added so that the content of chloride ion in the coffee beverage of the present invention may be 5 to 50 mg/100 g, preferably 8 to 40 mg/100 g, more preferably 10 to 30 mg/100 g. The content of chloride ion in a beverage can be analyzed by potentiometric titration.

In a beverage, chloride ion derived from raw materials other than above described chloride salts may be included. In the present invention, chlorides may be added so that the finally obtained chloride ion content (including both chloride ion derived from chloride salts and chloride ion derived from raw materials other than chloride salts) in a beverage may be within the above described range. Usually, the amount of chloride salts to be added is about 0.0005 to 0.1 mass%, preferably 0.0008 to 0.08 mass%, more preferably 0.001 to 0.05 mass% relative to the total amount of a beverage.

In the present invention, as mentioned above, by adding inorganic salts including a magnesium salt (preferably inorganic salts further including a potassium salt, and/or inorganic salts including a chloride) to a coffee beverage, the coffee beverage having reduced thermal deterioration odor while containing milk components and coffee lipids can be obtained. As mentioned above, though magnesium, potassium and chloride ions may be introduced into a beverage also from raw materials other than inorganic salts (for example from a milk component etc.), in the present invention, it is important that "inorganic salts" (a magnesium salt and a potassium salt which may be used as food additives) are added to a beverage.

From a different viewpoint, it is considered that the present invention is a manufacturing method of a milk-containing coffee beverage having reduced thermal deterioration odor including a step of adding inorganic salts including a magnesium salt (preferably inorganic salts further including a potassium salt, and/or inorganic salts including a chloride) to a beverage. The inorganic salts may be added at any point before conducting thermal sterilization of a beverage. When adding inorganic salts to a beverage, they are added so that the magnesium content (preferably additionally potassium content and/or chloride ion content) in the beverage is within the above described range. Thereby, a milk-containing coffee beverage having reduced thermal deterioration odor can be provided compared to the case in which any inorganic salt is not added.

(pH adjusting agent)

To a milk-containing coffee beverages filled in containers and capable of long-term storage at ambient temperature, usually, a pH adjusting agent is added for the purpose of moderating decrease in pH during sterilization. Saline taste, sliminess and unclearness due to this pH adjusting agent may cause increase of the thermal deterioration odor. The coffee beverage of the present invention including inorganic salts also exhibits remarkable effects on reduction in thermal deterioration odor in a coffee beverage containing such a pH adjusting agent. Therefore, a beverage containing a pH adjusting agent is one of the preferable aspects of the present invention. As a pH adjusting agent, a component which may moderate decrease in pH during sterilization and which exhibits alkalinity when dissolved in water is used, specifically, sodium hydrogen carbonate (baking soda), sodium hydroxide, potassium carbonate, potassium hydroxide, trisodium phosphate, tripotassium phosphate etc. are used. Among these, at least one sodium salt is preferably used. When a sodium salt is used, the even more remarkable effects of the present invention can be achieved by adjusting the sodium content in the beverage to 35 to 80 mg /100 g or adjusting the ratio of magnesium to sodium in the beverage [magnesium content /sodium content] (mass ratio) to 0.007 to 0.175 in addition to providing desired pH. The pH of the coffee beverage of the present invention is preferably 5.5 to 7.5, more preferably 6.0 to 7.0.

(Other components)

Additionally, components which are commonly formulated in a beverage, for example, a sweetening ingredient, antioxidant, flavoring agent, vitamin, emulsifier, thickening stabilizer etc. can be appropriately added to the coffee beverage of the present invention in addition to the above described components without departing from the expected target of the present invention.

In terms of being able to achieve the remarkable effects of the present invention, a coffee beverage containing a sweetening ingredient and an emulsifier can be exemplified as a preferable aspect. A sweetening ingredient refers to an ingredient providing sweet taste. Specifically, non-centrifugal sugars such as brown sugar lump, shiroshita sugar, casonade (brown sugar), Wasanbon (Japanese refined sugar), sorghum sugar and maple sugar; refined sugars such as hard sugars (white coarse crystal sugar, brown coarse crystal sugar, granulated sugar etc.), soft sugars (white, yellow, etc.), reprocessed sugars (cube sugar, crystal candy sugar, powdered sugar, granular porous sugar etc.) and liquid sugar; sugar sweeteners like monosaccharides (glucose, fructose, wood sugar, sorbose, galactose, isomerized sugar etc.), disaccharides (sucrose, maltose, lactose, isomerized lactose, palatinose etc.), oligosaccharides (fructo-oligosaccharide, maltooligosaccharide, isomalto-oligosaccharide, galacto-oligosaccharide, coupling sugar etc.), sugar alcohols (erythritol, sorbitol, xylitol, mannitol, maltitol, isomaltitol, lactitol, maltotriitol, isomaltotriitol, panitol, oligosaccharide alcohol, powdered reduced maltose sugar syrup) and the like; and high-intensity sweeteners like natural non-sugar sweeteners (stevia extract, glycyrrhiza extract etc.) and synthetic non-sugar sweeteners (aspartame, acesulfame-K etc.) and the like may be exemplified. Among these, disaccharides are preferable, in particular sucrose is preferable. An emulsifier refers to an additive having the effect on emulsification, for example, casein sodium, sucrose fatty acid esters, sorbitan fatty acid esters, polyglyceryl fatty acid esters are exemplified, and among these, casein sodium is preferable.

Recent years, numerous container-filled jelly beverages using agar, gelatin and/or other gelling agents have been developed. A jelly beverage refers to a beverage wherein jelly inside a container is disintegrated to be drunk by applying a force from outside of the container, and is in the form of solid or semisolid. In such solid or semisolid jelly beverages, the flavor itself is hard to be perceived compared to a liquid beverage, and thus thermal deterioration odor which is the problem to be solved in the present invention is also relatively less perceived and may not be a problem. In a solid or semisolid jelly beverage, since the effect on reduction in thermal deterioration odor in the present invention is essentially hard to be perceived, preferably the coffee beverage of the present invention does not contain any gelling agent, preferably the beverage is not a jelly beverage. As a gelling agent, for example, gelatin, pectin, carrageenan, locust bean gum, agar, deacylated gellan gum, native gellan gum, glucomannan, xanthan gum, guar gum, tara gum and alginate etc. may be exemplified. Similarly, also in a beverage to which satisfactory feeling of a drink is imparted by thickening using a polysaccharide thickener, since thermal deterioration odor is essentially hardly to be a problem, preferably the coffee beverage of the present invention does not contain a polysaccharide thickener. As a polysaccharide thickener, for example, gelatin, pectin, carrageenan, galactomannan, soybean polysaccharides, deacylated gellan gum, native gellan gum, glucomannan, xanthan gum, guar gum, tamarind seed gum, tamarind gum, gum arabic, tara gum and alginate etc. may be exemplified.

EXAMPLES

Hereinafter, details of the present invention will be specifically described by providing experimental examples, but the present invention is not limited thereof. Herein, numerical ranges are stated as including the endpoints thereof, unless otherwise indicated.

<Component analysis>

(1) Magnesium content

According to the analytical method of magnesium described in "Labeling standards for foods (March 30 th, 2015 Shou-Shoku-Hyou No. 139) - Appendix: Analytical methods for nutritional components", measurements were conducted using inductively coupled plasma emission spectrometry (ICP emission spectrometry).

(2) Potassium content

According to the analytical method of potassium described in "Labeling standards for foods (March 30 th, 2015 Shou-Shoku-Hyou No. 139) - Appendix: Analytical methods for nutritional components", measurements were conducted using hydrochloric acid extraction method as a pretreatment method and atomic absorption spectrophotometry as a measuring method.

(3) Chloride ion content

A platinum indicator electrode as a measuring electrode and a reference electrode were immersed in a sample, potentiometric titration was used in which the sample was titrated with a silver nitrate standard solution while being stirred to analyze the concentration of chloride ion, and the concentration was calculated by the following formula:

$$\text{Chloride ion content (mg /100 g)} = M \times F \times 1.7725 \times 100 / S$$

M: amount of 0.05 mol/L silver nitrate standard solution (mL) required for titration
F: factor of 0.05 mol/L silver nitrate standard solution used for titration
S: sampling amount of a sample (g)
1.7725: amount of chloride ion (mg) corresponding to 1mL of 0.05 mol/L silver nitrate standard solution

(4) Protein content

The protein content was analyzed by Kjeldahl method described in "Labeling standards for foods (March 30 th, 2015 Shou-Shoku-Hyou No. 139) - Appendix: Analytical methods for nutritional components", and calculated by the following formula:

$$\text{Protein content (g /100 g)} = (V-B) \times F \times 0.0014 \times K \times 100 / S$$

V: titration amount for main test (mL)
B: titration amount for blank test (mL)
F: factor of 0.05 mol/L sulfuric acid standard solution
K: nitrogen-to-protein conversion factor
S: sampling amount of a sample (g)
0.0014: amount of nitrogen (g) corresponding to 1 mL of 0.05 mol/L sulfuric acid standard solution.

(5) Coffee lipid content

2 g of sample was put into a glass centrifuge tube, to which 4 ml of acetonitrile was added, and the mixture was stirred by a vortex mixer for 1 minute. The stirred mixture was subjected to centrifugal treatment (1680×g, 30 min, 20 °C) by a centrifuge, and 10 ml of supernatant was transferred to a volumetric flask. 2 ml of ethanol was added to the centrifuge tube, precipitate was crushed with the tip of a pipette and diffused. The dispersion was treated by an ultrasonic bath for 15 minutes to further diffuse insoluble matter, stirred by a vortex mixer for 1 minute, subjected to centrifugal treatment (1680xg, 30 min, 20 °C) by a centrifuge, and 10 ml of supernatant was transferred to a volumetric flask. Another extraction operation using ethanol was conducted similarly. The extraction liquids were collected into the 10 ml volumetric flask and diluted with ethanol by adding ethanol to fill the flask, then the well mixed liquid was filtered by a PTFE membrane filter (manufactured by TOYO ROSHI KAISHA, LTD., 0.2 μm pore diameter, 25 mm diameter) to obtain an analysis sample. The analysis sample was subjected to LC-MS/MS to determine the coffee lipid content. The analysis condition of LC-MS/MS was as follows:

[Machine type to be used]

- MS:4000QTRAP (manufactured by AB Sciex Pte. Ltd.)
- LC:1290Infinity (manufactured by Agilent Technologies, Inc.)

[LC condition]

- Mobile phase: (A) 0.1 % aqueous solution of formic acid, (B) ethanol
- Flow rate: 0.4 ml/min
- Gradient condition: 0-1 min (80% B), 1-5 min (80-100% B), 5-7.5 min (100% B), equilibration by initial mobile phase 2.5 min
- Column: manufactured by Agilent Technologies, Inc., Zorbax Eclipse Plus RRHD C18 (1.8 μm, 2.1 × 150 mm)
- Column temperature: 45 °C
- Introduction amount: 1 μl

[MS condition]

- Ion source: Heated Nebulizer
- CUR: 20
- CAD: Medium
- NC: 5
- TEM: 400
- GS1: 40
- ihe: ON
- Condition of switching valve: among the whole mobile phase having passed through the column, only the fraction of 4.5 - 5.8 min was introduced into MS.

[MRM condition]

- Kahweol palmitate: 535.41 - 279.17 (Q1 - Q3)
- Cafestol palmitate: 537.43 - 281.19 (Q1 - Q3)
- DP: 95
- EP: 10
- CE: 21
- CXP: 12

In the present invention, the kahweol palmitate standard (manufactured by MP Biomedicals, LLC) and the cafestol palmitate standard (manufactured by LKT Laboratories, Inc.) were analyzed under the above condition to prepare the calibration curve in advance, and kahweol palmitate (KwO-pal) and cafestol palmitate (CfO-pal) in the sample were quantified. The elution time of kahweol palmitate under the above condition was 5.1 minutes, the elution time of cafestol palmitate was 5.2 minutes. The total content of kahweol palmitate and cafestol palmitate was determined as the coffee lipid content.

(6) Content of flavor analysis (δ-dodecalactone and δ-tetradecalactone)

5 ml of sample was put into a 20 ml screw-type glass vial (18 mm diameter, manufactured by GERSTEL K.K.), which was sealed tightly with a metal lid having a PTFE septum (manufactured by GERSTEL K.K.), and flavor components were extracted by solid-phase microextraction (SPME). Quantification was conducted by standard addition method using peak areas of detected signals in EIC mode of GC/MS. The analysis condition was as follows:

[SPME]

-  SPME fiber: made of DVB/Carboxen/PDMS, 2 cm
-  Component extraction: at 60 °C, 40 minutes

[GC/MS]

-  Analysis device: GC/MS Triple Quad 7000 (manufactured by Agilent Technologies, Inc.)
-  Carrier gas: helium, 36 cm /sec
-  Column: VF-WAXms (manufactured by Agilent Technologies, Inc.; 60 m × 0.25 mm, 0.50 μm)
-  GC temperature condition: 40 °C (5 minutes) - 15 °C /min - 250 °C (10 minutes)

For quantification of δ-dodecalactone and δ-tetradecalactone, the detection values were calculated by standard addition method using respective standards (respectively, commercially available reagents).

Experimental example 1-1 Effect of a magnesium salt on reduction in heated odor (1)

A ground product of roasted coffee beans obtained by medium grinding of arabica roasted beans (L value 20) produced in Ethiopia was filled in 4 cylindrical extraction towers (columns) so that the filling amount of each tower was 4.0 kg, hot water at 110 °C was supplied to the towers, and continuous multistage extraction (SV: 1[h$^{-1}$], BV: 111[v/v]) was conducted to obtain the coffee extract having brix of 7.9 and pH of 5.5 (coffee lipid content: 6.3 mg /100 g). Milk (milk component), magnesium chloride hexahydrate (inorganic salt), sodium hydrogen carbonate (pH adjusting agent), sugar (sweetening ingredient), casein sodium and sucrose fatty acid ester (emulsifiers) and flavoring agent shown in Table 1 were mixed with this coffee extract (coffee component), to which water was added to obtain total amount of 1000 g, and the mixture was subjected to homogenizing treatment to obtain the liquid formulation. This liquid formulation was filled in 190 g can, then subjected to thermal sterilization at 125 °C for 20 minutes to prepare a thermally sterilized milk-containing coffee beverage (pH 6.5), then cooled to 20 °C.

[Table 1]

| Formulated amount (g) | No.1-1 | No.1-2 | No.1-3 |
|---|---|---|---|
| Milk | 30 | 30 | 30 |
| Coffee extract | 57 | 57 | 57 |
| Sodium hydrogen carbonate | 0.5 | 0.5 | 0.5 |
| Magnesium chloride hexahydrate | 0 | 0.02 | 0.6 |
| Sugar | 50 | 50 | 50 |
| Emulsifier (sucrose fatty acid ester) | 0.7 | 0.7 | 0.7 |
| Casein sodium | 1.0 | 1.0 | 1.0 |
| Flavoring agent | 1.0 | 1.0 | 1.0 |
| Water | Balance | Balance | Balance |
| Total | 1000 | 1000 | 1000 |

For the obtained thermally sterilized milk-containing coffee beverage, in addition to analyses of the various component, sensory evaluation for the strength of thermal deterioration odor was carried out by 10 expert panelists. Each panelist evaluated whether the thermal deterioration odor was reduced or not compared to the control (No. 1-1), and the following 5-grade evaluation was determined depending on the number of panelists who recognized reduction in odor.

- 5 points: All panelists (10) feel that the sample of interest has lower thermal deterioration odor than that of control.
- 4 points: More than half of panelists (7 to 9) feel that the sample of interest has lower thermal deterioration odor than that of control.
- 3 points: About half of panelists (5 to 6) feel that the sample of interest has lower thermal deterioration odor than that of control.
- 2 points: Less than half of panelists (2 to 4) feel that the sample of interest has lower thermal deterioration odor than that of control.
- 1 point: Only 1 panelist or no panelist feel that the sample of interest has lower thermal deterioration odor than that of control.

The results are shown in Table 2. It was found that thermal deterioration odor was reduced by adding magnesium chloride to the beverage.

[Table 2]

| | | No.1-1 | No.1-2 | No.1-3 |
|---|---|---|---|---|
| Formulated amount | Magnesium chloride hexahydrate (g) | 0 | 0.02 | 0.6 |
| | Coffee solid content (%) | 0.45 | 0.45 | 0.45 |
| | Milk solid content (%) | 0.38 | 0.38 | 0.38 |
| Analysis values of component | (A) KwO-pal (mg/100g) | 0.21 | 0.21 | 0.21 |
| | (B) CfO-pal (mg/100g) | 0.15 | 0.15 | 0.15 |
| | Coffee lipid content (A) + (B) (mg/100g) | 0.36 | 0.36 | 0.36 |
| | Protein content (g /100 g) | 0.10 | 0.10 | 0.10 |
| | Magnesium content (mg /100 g) | 0.38 | 0.64 | 7.54 |
| | Potassium content (mg /100 g) | 30.2 | 30.2 | 30.2 |
| | Chloride ion content (mg /100 g) | 3.2 | 3.9 | 24.1 |
| | Sodium content (mq /100 g) | 15.7 | 15.7 | 15.7 |
| | [(mg/100g)/(g/100g)] Mg/ Protein [(mg/100g)/(g/100g)] | 3.8 | 6.4 | 75.4 |
| | Mg/Na | 0.02 | 0.04 | 0.48 |
| Sensory evaluation (grade) | Strength of thermal deterioration odor | Control | 4 | 4 |

Experimental example 1-2 Effect of a magnesium salt on reduction in heated odor (2)

Thermally sterilized milk-containing coffee beverages (pH 6.6) were produced similarly to Experimental example 1-1 except that the respective amounts of milk and coffee extracts etc. were varied according to the formulations shown in Table 3, and evaluated similarly to Experimental example 1-1 using No. 1-4 as a control. The results are shown in Table 4. Even if the contents of a coffee component and a milk component were higher, thermal deterioration odor was reduced by adding magnesium chloride to the beverage. For No. 1-8 beverage, thermal deterioration odor was reduced, but there were panelists who made an evaluation that harsh taste was felt due to magnesium.

[Table 3]

| Formulated amount (g) | No.1-4 | No.1-5 | No.1-6 | No.1-7 | No.1-8 |
|---|---|---|---|---|---|
| Milk | 100 | 100 | 100 | 100 | 100 |
| Coffee extract | 190 | 190 | 190 | 190 | 190 |
| Sodium hydrogen carbonate | 1.0 | 1.0 | 1.0 | 1.0 | 1.0 |
| Magnesium chloride hexahydrate | 0 | 0.02 | 0.05 | 0.22 | 0.6 |
| Sugar | 50 | 50 | 50 | 50 | 50 |
| Emulsifier (sucrose fatty acid ester' | 0.7 | 0.7 | 0.7 | 0.7 | 0.7 |
| Casein sodium | 1.0 | 1.0 | 1.0 | 1.0 | 1.0 |

(continued)

| Formulated amount (g) | No.1-4 | No.1-5 | No.1-6 | No.1-7 | No.1-8 |
|---|---|---|---|---|---|
| Flavoring agent | 1.0 | 1.0 | 1.0 | 1.0 | 1.0 |
| Water | Balance | Balance | Balance | Balance | Balance |
| Total | 1000 | 1000 | 1000 | 1000 | 1000 |

[Table 4]

| | | No.1-4 | No.1-5 | No.1-6 | No.1-7 | No.1-8 |
|---|---|---|---|---|---|---|
| Formulated amount | Magnesium chloride hexahydrate (g) | 0 | 0.02 | 0.05 | 0.22 | 0.6 |
| | Coffee solid content (%) | 1.50 | 1.50 | 1.50 | 1.50 | 1.50 |
| | Milk solid content (%) | 1.26 | 1.26 | 1.26 | 1.26 | 1.26 |
| Analysis values of component | (A)KwO-pal (mg/100g) | 0.70 | 0.70 | 0.70 | 0.70 | 0.70 |
| | (B)CfO-pal (mg/100g) | 0.50 | 0.50 | 0.50 | 0.50 | 0.50 |
| | Coffee lipid content (A)+(B) (mg/100g) | 1.20 | 1.20 | 1.20 | 1.20 | 1.20 |
| | Protein content (g /100 g) | 0.33 | 0.33 | 0.33 | 0.33 | 0.33 |
| | Magnesium content (mg /100 g) | 1.34 | 1.58 | 1.93 | 3.97 | 8.51 |
| | Potassium content (mg /100 g) | 88.9 | 88.9 | 88.9 | 88.9 | 88.9 |
| | Chloride ion content (mg /100 g) | 10.7 | 11.4 | 12.4 | 18.4 | 31.6 |
| | Sodium content (mg /100 g) | 34.1 | 34.1 | 34.1 | 34.1 | 34.1 |
| | Mg/ Protein [(mg/100g)/(g/100g)] | 4.1 | 4.8 | 5.8 | 12.0 | 25.8 |
| | Mg/Na | 0.04 | 0.05 | 0.06 | 0.12 | 0.25 |
| Sensory evaluation (grade) | Strength of thermal deterioration odor | Control | 4 | 4 | 4 | 4 |

Experimental example 1-3 Effect of a magnesium salt on reduction in heated odor (3)

Thermally sterilized milk-containing coffee beverages (pH 6.6) were produced similarly to Experimental example 1-1 except that powdered skim milk was additionally used as a milk component according to the formulations shown in Table 5, and evaluated using No. 1-9 as a control. The results are shown in Table 6. Even if the amount of the milk components was higher, thermal deterioration odor was reduced by adding magnesium chloride to the beverage. For No. 1-11 beverage, thermal deterioration odor was reduced, but there were panelists who made an evaluation that harsh taste was felt due to magnesium.

[Table 5]

| Formulated amount (g) | No.1-9 | No.1-10 | No.1-11 |
|---|---|---|---|
| Milk | 100 | 100 | 100 |
| Powdered skim milk | 8 | 8 | 8 |
| Coffee extract | 190 | 190 | 190 |
| Sodium hydrogen carbonate | 1.5 | 1.5 | 1.5 |
| Magnesium chloride hexahydrate | 0 | 0.02 | 0.6 |
| Sugar | 50 | 50 | 50 |
| Emulsifier (sucrose fatty acid ester) | 0.7 | 0.7 | 0.7 |
| Casein sodium | 1.0 | 1.0 | 1.0 |
| Flavoring agent | 1.0 | 1.0 | 1.0 |

(continued)

| Formulated amount (g) | | No.1-9 | No.1-10 | No.1-11 |
|---|---|---|---|---|
| Water | | Balance | Balance | Balance |
| | Total | 1000 | 1000 | 1000 |

[Table 6]

| | | No.1-9 | No.1-10 | No.1-11 |
|---|---|---|---|---|
| Formulated amount | Magnesium chloride hexahydrate (g) | 0 | 0.02 | 0.6 |
| | Coffee solid content (%) | 1.50 | 1.50 | 1.50 |
| | Milk solid content (%) | 2.03 | 2.03 | 2.03 |
| Analysis values of component | (A)KwO-pal (mg/100g) | 0.70 | 0.70 | 0.70 |
| | (B)CfO-pal (mg/100g) | 0.50 | 0.50 | 0.50 |
| | Coffee lipid content (A)+ (B) (mg/100g) | 1.20 | 1.20 | 1.20 |
| | Protein content (q /100 g) | 0.60 | 0.60 | 0.60 |
| | Magnesium content (mg /100 g) | 2.22 | 2.46 | 9.39 |
| | Potassium content (mg /100 g) | 103.3 | 103.3 | 103.3 |
| | Chloride ion content (mg /100 g) | 19.3 | 20.0 | 40.2 |
| | Sodium content (mq /100 g) | 52.3 | 52.3 | 52.3 |
| | Mg/ Protein [(mg/100g)/(g/100g)] | 3.7 | 4.1 | 15.7 |
| | Mg/Na | 0.04 | 0.05 | 0.18 |
| Sensory evaluation (grade) | Strength of thermal deterioration odor | Control | 3 | 4 |

Experimental example 1-4 Effect of a magnesium salt on reduction in heated odor (4)

Thermally sterilized milk-containing coffee beverages (pH 6.5) were produced similarly to Experimental example 1-1 except that commercially available coffee oil was additionally added to the formulation of No. 1-1 of Experimental example 1-1 according to the formulations shown in Table 7, and evaluated. The coffee oil was an oil (crude product) obtained by carbon dioxide extraction from arabica roasted coffee beans. The results are shown in Table 8. For the beverages having more coffee lipid (No. 1-12, 1-14), all panelists perceived increased thermal deterioration odor compared to the beverage of No. 1-1. Even if the amount of the coffee lipid was higher than that of No. 1-1, it was confirmed that in No. 1-13 thermal deterioration odor was reduced by adding magnesium chloride to the beverage. However, for the beverage having the coffee lipid content more than 1.5 mg /100 g (No. 1-15), only less than half of panelists recognized the effect of reduction in heated odor by a magnesium salt.

[Table 7]

| Formulated amount (g) | No.1-12 | No.1-13 | No.1-14 | No.1-15 |
|---|---|---|---|---|
| Milk | 30 | 30 | 30 | 30 |
| Coffee extract | 57 | 57 | 57 | 57 |
| Coffee oil | 0.1 | 0.1 | 0.3 | 0.3 |
| Sodium hydrogen carbonate | 0.5 | 0.5 | 0.5 | 0.5 |
| Magnesium chloride hexahydrate | 0 | 0.02 | 0 | 0.02 |
| Sugar | 50 | 50 | 50 | 50 |
| Emulsifier (sucrose fatty acid ester) | 0.7 | 0.7 | 0.7 | 0.7 |
| Casein sodium | 1.0 | 1.0 | 1.0 | 1.0 |
| Flavoring agent | 1.0 | 1.0 | 1.0 | 1.0 |

(continued)

| Formulated amount (g) | No.1-12 | No.1-13 | No.1-14 | No.1-15 |
|---|---|---|---|---|
| Water | Balance | Balance | Balance | Balance |
| Total | 1000 | 1000 | 1000 | 1000 |

[Table 8]

| | | No.1-12 | No.1-13 | No.1-14 | No.1-15 |
|---|---|---|---|---|---|
| Formulated amount | Magnesium chloride hexahydrate (g) | 0 | 0.02 | 0.6 | 0.6 |
| | Coffee solid content (%) | 0.45 | 0.45 | 0.45 | 0.45 |
| | Milk solid content (%) | 0.38 | 0.38 | 0.38 | 0.38 |
| Analysis values of component | (A)KwO-pal (mg/100g) | 0.41 | 0.41 | 0.74 | 0.74 |
| | (B)CfO-pal (mg/100g) | 0.41 | 0.41 | 0.84 | 0.84 |
| | Coffee lipid content (A)+(B) (mg/100g) | 0.82 | 0.82 | 1.58 | 1.58 |
| | Protein content (g /100 g) | 0.10 | 0.10 | 0.10 | 0.10 |
| | Magnesium content (mg /100 g) | 0.38 | 0.64 | 0.38 | 0.64 |
| | Potassium content (mg /100 g) | 31.0 | 31.0 | 31.0 | 31.0 |
| | Chloride ion content (mg /100 g) | 3.2 | 3.9 | 24.1 | 24.8 |
| | Sodium content (mg /100 g) | 15.7 | 15.7 | 15.7 | 15.7 |
| | Mg/ Protein [(mg/100g)/(g/100g)] | 3.8 | 6.4 | 3.8 | 6.4 |
| | Mg/Na | 0.02 | 0.04 | 0.02 | 0.04 |
| Sensory evaluation (grade) | Strength of thermal deterioration odor | Control | 4 | Control | 2 |

Experimenal example 2-1 Effect of a potasium salt on reduction in headed odor (1)

Thermally sterilized milk-containing coffee beverages (pH 6.5) were produced similarly to Experimental example 1-1 except that No. 1-4 of Experimental example 1-2 is used as a control, and that potassium chloride was further added in the amount shown in Table 9, and evaluated. The results are shown in Table 10. For the beverage to which only potassium chloride was added without adding magnesium chloride (sample No. 2-3), the effect on reduction in thermal deterioration odor was not confirmed. On the other hand, for the beverage in which magnesium chloride and potassium chloride were used in combination (sample Nos. 2-4 to 2-8), the thermal deterioration odor was remarkably reduced. Compared to the case of adding only magnesium chloride (No. 2-2), in the case of using potassium chloride in combination in an amount more than a certain level (Nos. 2-4, and 2-6 to 2-8), higher effect on reduction in thermal deterioration odor was obtained. This milk-containing coffee beverage using a magnesium salt and a potassium salt in combination had reduced thermal deterioration odor, and as a result, fresh milk flavor is remarkably felt in the beverage.

[Table 9]

| Formulated amount (g) | No.2-1 (No.1-4) | No.2-2 (No.1-6) | No.2-3 | No.2-4 | No.2-5 | No.2-6 | No.2-7 | No.2-8 |
|---|---|---|---|---|---|---|---|---|
| Milk | 100 | 100 | 100 | 100 | 100 | 100 | 100 | 100 |
| Coffee extract | 190 | 190 | 190 | 190 | 190 | 190 | 190 | 190 |
| Sodium hydrogen carbonate | 1.0 | 1.0 | 1.0 | 1.0 | 1.0 | 1.0 | 1.0 | 1.0 |
| Magnesium chloride hexahydrate | 0 | 0.05 | 0 | 0.05 | 0.05 | 0.05 | 0.05 | 0.05 |
| Potassium chloride | 0 | 0 | 0.067 | 0.067 | 0.03 | 0.12 | 0.77 | 1 |

(continued)

| Formulated amount (g) | No.2-1 (No.1-4) | No.2-2 (No.1-6) | No.2-3 | No.2-4 | No.2-5 | No.2-6 | No.2-7 | No.2-8 |
|---|---|---|---|---|---|---|---|---|
| Sugar | 50 | 50 | 50 | 50 | 50 | 50 | 50 | 50 |
| Emulsifier (sucrose fatty acid ester) | 0.7 | 0.7 | 0.7 | 0.7 | 0.7 | 0.7 | 0.7 | 0.7 |
| Casein sodium | 1.0 | 1.0 | 1.0 | 1.0 | 1.0 | 1.0 | 1.0 | 1.0 |
| Flavoring agent | 1.0 | 1.0 | 1.0 | 1.0 | 1.0 | 1.0 | 1.0 | 1.0 |
| Water | Balance | Balance | Balance | Balance | Balance | Balance | Balance | Balance |
| Total | 1000 | 1000 | 1000 | 1000 | 1000 | 1000 | 1000 | 1000 |

[Table 10]

| | | No.2-1 | No.2-2 | No.2-3 | No.2-4 | No.2-5 l | No.2-6 | No.2-7 | No.2-8 |
|---|---|---|---|---|---|---|---|---|---|
| Formulated amount | Magnesium chloride hexahydrate (g) | 0 | 0.05 | 0 | 0.05 | 0.05 | 0.05 | 0.05 | 0.05 |
| | Potassium chloride (g) | 0 | 0 | 0.067 | 0.067 | 0.03 | 0.12 | 0.77 | 1 |
| | Coffee solid content (%) | 1.50 | 1.50 | 1.50 | 1.50 | 1.50 | 1.50 | 1.50 | 1.50 |
| | Milk solid content (%) | 1.26 | 1.26 | 1.26 | 1.26 | 1.26 | 1.26 | 1.26 | 1.26 |
| Analysis values of component | (A)Kwo-pal (mg/100g) | 0.70 | 0.70 | 0.70 | 0.70 | 0.70 | 0.70 | 0.70 | 0.70 |
| | (B)CfO-pal (mg/100g) | 0.50 | 0.50 | 0.50 | 0.50 | 0.50 | 0.50 | 0.50 | 0.50 |
| | Coffee lipid content (A)+(B) (mg/100g) | 1.20 | 1.20 | l.20 | 1.20 | 1.20 | 1.20 | 1.20 | 1.20 |
| | Protein content (g /100 | 0.33 | 0.33 | 0.33 | 10.33 | 0.33 | 0.33 | 0.33 | 0.33 |
| | Magnesium content (mg /100 g) | 1.34 | 1.93 | 1.34 | 1.93 | 1.93 | 1.93 | 1.93 | 1.93 |
| | Potassium content (mg /100 g) | 88.9 | 88.9 | 92.4 | 92.4 | 90.4 | 95.1 | 129.2 | 141.3 |
| | Chloride ion content (mg /100 g) | 10.7 | 12.4 | 13.9 | 15.6 | 13.9 | 18.1 | 49.1 | 60.0 |
| | Sodium content (mg /100 g) | 34.1 | 34.1 | 34.1 | 34.1 | 34.1 | 34.1 | 34.1 | 34.1 |
| | (C) δ-dodecalactone (μg /100 g) | 2.3 | 2.3 | 2.3 | 2.3 | 2.3 | 2.3 | 2.3 | 2.3 |
| | (D) δ-tetradecalactone (μg /100 g) | 9.2 | 9.2 | 9.2 | 9.2 | 9.2 | 9.2 | 9.2 | 9.2 |
| | (C)+(D) (μg/100g) | 11.5 | 11.5 | 11.5 | 11.5 | 11.5 | 11.5 | 11.5 | 11.5 |

(continued)

|  |  | No.2-1 | No.2-2 | No.2-3 | No.2-4 | No.2-5 I | No.2-6 | No.2-7 | No.2-8 |
|---|---|---|---|---|---|---|---|---|---|
|  | Mg/ Protein [(mg/100g]/(g/100g)] | 4.1 | 5.8 | 4.1 | 5.8 | 5.8 | 5.8 | 5.8 | 5.8 |
|  | Mg/Na | 0.04 | 0.06 | 0.04 | 0.06 | 0.06 | 0.06 | 0.06 | 0.06 |
| Sensory evaluation (grade | Strength of thermal deterioration odor | Control | 4 | 1 | 5 | 4 | 5 | 5 | 5 |

Experimental example 2-2 Effect of a potassium salt on reduction in heated odor (2)

Thermally sterilized milk-containing coffee beverages (pH 6.6) were produced similarly to Experimental example 1-1 except that the beverage of No. 1-9 of Experimental example 1-3 in which powdered skim milk is formulated is used as a control, and that magnesium chloride and/or potassium chloride was added in the amount shown in Table 11, and evaluated. The results are shown in Table 12. Even if the amount of a milk component was higher, more remarkable effect on reduction in thermal deterioration odor was obtained by using a magnesium salt and a potassium salt in combination. Thus, a milk-containing coffee beverage having remarkable fresh milk flavor was obtained.

[Table 11]

| Formulated amount (g) | No.2-9 (No.1-9) | No.2-10 (No.1-10) | No.2-11 | No.2-12 | No.2-13 |
|---|---|---|---|---|---|
| Milk | 100 | 100 | 100 | 100 | 100 |
| Powdered skim milk | 8 | 8 | 8 | 8 | 8 |
| Coffee extract | 190 | 190 | 190 | 190 | 190 |
| Sodium hydrogen carbonate | 1.5 | 1.5 | 1.5 | 1.5 | 1.5 |
| Magnesium chloride hexahydrate | 0 | 0.02 | 0.02 | 0.22 | 0.22 |
| Potassium chloride | 0 | 0 | 0.067 | 0 | 0.77 |
| Sugar | 50 | 50 | 50 | 50 | 50 |
| Emulsifier (sucrose fatty acid ester) | 0.7 | 0.7 | 0.7 | 0.7 | 0.7 |
| Casein sodium | 1.0 | 1.0 | 1.0 | 1.0 | 1.0 |
| Flavoring agent | 1.3 | 1.3 | 1.3 | 1.3 | 1.3 |
| Water | Balance | Balance | Balance | Balance | Balance |
| Total | 1000 | 1000 | 1000 | 1000 | 1000 |

[Table 12]

|  |  | No.2-9 | No.2-10 | No.2-11 | No.2-12 | No.2-13 |
|---|---|---|---|---|---|---|
| Formulated amount | Magnesium chloride hexahydrate (g) | 0 | 0.02 | 0.02 | 0.22 | 0.22 |
|  | Potassium chloride (q) | 0 | 0 | 0.067 | 0 | 0.77 |
|  | Coffee solid content (%) | 1.50 | 1.50 | 1.50 | 1.50 | 1.50 |
|  | Milk solid content (%) | 2.03 | 2.03 | 2.03 | 1.26 | 2.03 |
| Analysis values of component | (A)KwO-pal (mg/100g) | 0.70 | 0.70 | 0.70 | 0.70 | 0.70 |
|  | (B)CfO-pal (mg/100g) | 0.50 | 0.50 | 0.50 | 0.50 | 0.50 |

(continued)

|  |  | No.2-9 | No.2-10 | No.2-11 | No.2-12 | No.2-13 |
|---|---|---|---|---|---|---|
|  | Coffee lipid content **(A)+ (B)** **(mg/100g)** | 1.20 | 1.20 | 1.20 | 1.20 | 1.20 |
|  | Protein content (g /100 g) | 1.98 | 1.98 | 1.98 | 1.98 | 1.98 |
|  | Magnesium content (mg /100 g) | 2.22 | 2.46 | 2.46 | 4.85 | 4.85 |
|  | Potassium content (mg /100 g) | 103.3 | 103.3 | 106.8 | 103.3 | 143.6 |
|  | Chloride ion content (mg /100 g) | 19.3 | 20.0 | 23.1 | 26.9 | 63.5 |
|  | Sodium content (mg /100 g) | 52.3 | 52.3 | 52.3 | 52.3 | 52.3 |
|  | (C) $\delta$-dodecalactone ($\mu$g /100 g) | 5.2 | 5.2 | 5.2 | 5.2 | 5.2 |
|  | (D) $\delta$-tetradecalactone ($\mu$g /100 g) | 9.6 | 9.6 | 9.6 | 9.6 | 9.6 |
|  | (C) + (D) ($\mu$g /100 g) | 14.8 | 14.8 | 14.8 | 14.8 | 14.8 |
|  | Mg/ Protein **[(mg/100g)/(g/100g)]** | 1.1 | 1.2 | 1.2 | 2.4 | 2.4 |
|  | **Mg/Na** | 0.04 | 0.05 | 0.05 | 0.09 | 0.09 |
| Sensory evaluation (grade) | Strength of thermal deterioration odor | **Control** | 4 | 5 | 4 | 5 |

Experimental example 3 Effect of a magnesium salt and a potassium salt other than chloride on reduction in heated odor

Thermally sterilized milk-containing coffee beverages (pH 6.6) were produced similarly to Experimental example 2-2 except that the inorganic salts formulated in the beverage of No. 2-13 of Experimental example 2-2 was replaced by the specified type and amount each of the magnesium salt, potassium salt and sodium salt shown in Table 13, and evaluated using No. 2-9 as a control. The results are shown in Table 14. While high reduction effect of heated odor was obtained by using a magnesium salt and a potassium salt in combination, when chloride was not used as an inorganic salt (sample No. 3-5), some panelists made evaluation that the effect was lower than the case of using chloride.

[Table 13]

| Formulated amount (g) | No.3-1 (No.2-13) | No.3-2 | No.3-3 | No.3-4 | No.3-5 | No.3-6 |
|---|---|---|---|---|---|---|
| Milk | 100 | 100 | 100 | 100 | 100 | 100 |
| Powdered skim milk | 8 | 8 | 8 | 8 | 8 | 8 |
| Coffee extract | 190 | 190 | 190 | 190 | 190 | 190 |
| Sodium hydrogen carbonate | 1.5 | 1.5 | 1.5 | 1.5 | 1.5 | 1.5 |
| Magnesium chloride hexahydrate | 0.22 | - | 0.22 | 0.22 | - | - |
| Magnesium sulphate | - | 0.13 | - | - | 0.13 | 0.13 |
| Potassium chloride | 0.77 | 0.77 | - | - | - | - |
| Potassium carbonate | - | - | 1.42 | - | - | - |
| Dipotassium hydrogen phosphate | - | - | - | 0.9 | 0.9 | 0.9 |
| Sodium chloride | - | - | - | - | - | 0.3 |
| Sugar | 50 | 50 | 50 | 50 | 50 | 50 |
| Emulsifier (sucrose fatty acid ester) | 0.7 | 0.7 | 0.7 | 0.7 | 0.7 | 0.7 |

(continued)

| Formulated amount (g) | No.3-1 (No.2-13) | No.3-2 | No.3-3 | No.3-4 | No.3-5 | No.3-6 |
|---|---|---|---|---|---|---|
| Casein sodium | 1.0 | 1.0 | 1.0 | 1.0 | 1.0 | 1.0 |
| Flavoring agent | 1.0 | 1.0 | 1.0 | 1.0 | 1.0 | 1.0 |
| Water | Balance | Balance | Balance | Balance | Balance | Balance |
| Total | 1000 | 1000 | 1000 | 1000 | 1000 | 1000 |

[Table 14]

| | | No.3-1 | No.3-2 | No.3-3 | No.3-4 | No.3-5 | No.3-6 l |
|---|---|---|---|---|---|---|---|
| Formulated amount | Magnesium chloride hexahydrate | 0.22 | - | 0.22 | 0.22 | - | - |
| | Magnesium sulphate | - | 0.13 | - | - | 0.13 | 0.13 |
| | Potassium chloride | 0.77 | 0.77 | - | - | - | - |
| | Potassium carbonate | - | - | 1.42 | - | - | - |
| | Dipotassium hydrogen phosphate _ | - | - | - | 0.9 | 0.9 | 0.9 |
| | Sodium chloride | - | - | - | - | - | 0.3 |
| | Coffee solid content (%) | 1.50 | 1.50 | 1.50 | 1.50 | 1.50 | 1.50 |
| | Milk solid content (%) | 2.03 | 2.03 | 2.03 | 2.03 | 2.03 | 2.03 |
| Analysis values of component | (A)KwO-pal (mg/100g) | 0.70 | 0.70 | 0.70 | 0.70 | 0.70 | 0.70 |
| | (B)CfO-pal (mg/100g) | 0.50 | 0.50 | 0.50 | 0.50 | 0.50 | 0.50 |
| | Coffee lipid content (A)+(B) (mg/100g) | 1.20 | 1.20 | 1.20 | 1.20 | 1.20 | 1.20 |
| | Protein content (q /100 q) | 1.98 | 1.98 | 1.98 | 1.98 | 1.98 | 1.98 |
| | Magnesium content (mg /100 q) | 4.85 | 4.84 | 4.85 | 4.85 | 4.84 | 4.84 |
| | Potassium content (mq /100 q) | 143.6 | 143.6 | 143.4 | 143.7 | 143.7 | 143.7 |
| | Chloride ion content (mg /100 q) | 63.5 | 55.9 | 26.9 | 26.9 | 19.3 | 37.4 |
| | Sodium content (mg /100 g) | 52.3 | 52.3 | 52.3 | 52.3 | 52.3 | 52.8 |
| | (C) $\delta$-dodecalactone ($\mu$g /100 g) | 2.3 | 2.3 | 2.3 | 2.3 | 2.3 | 2.3 |
| | (D) $\delta$-tetradecalactone ($\mu$g /100 g) | 9.2 | 9.2 | 9.2 | 9.2 | 9.2 | 9.2 |
| | (C) + (D) ($\mu$g/100g) | 11.5 | 11.5 | 11.5 | 11.5 | 11.5 | 11.5 |
| | Mg/ Protein [(mg/100g)/(g/100g)] | 2.4 | 2.4 | 2.4 | 2.4 | 2.4 | 2.4 |
| | Mg/Na | 0.09 | 0.09 | 0.09 | 0.09 | 0.09 | 0.09 |
| Sensory evaluation (grade) | Strength of thermal deterioration odor | 5 | 5 | 5 | 5 | 4 | 5 |

Experimental example 4 Effect of a magnesium salt and a potasium salt on

reduction in heated odor (3)

Commercially available milk-containing coffee beverage A filled in a 190 g can (type: coffee; raw materials: milk, coffee, sugar, dairy product, dextrin/casein sodium, emulsifier, flavoring agent, sweetening ingredient (acesulfame K) and commercially available milk-containing coffee beverage B filled in a polyethylene terephthalate bottle (type: coffee beverage; raw materials: milk (domestically manufactured), sugar, coffee, dairy product, dextrin /flavoring agent, emulsifier, casein sodium) were used. Commercially available products A and B were unsealed, to which inorganic salts in the amount shown in Table 15 were added, and the mixtures were well stirred to dissolve the salts. Using beverages to which any inorganic salt was not added (i.e. Commercially available products A and B) as controls, the strength of thermal deterioration odor was evaluated. Each 185 g of beverage to which inorganic salts were added was filled in a 190 g can, the cans were seamed and submerged (so-called "completely immersed") in a hot-water bath to be subjected to thermal sterilization, again unsealed and the flavor was evaluated. The results are shown in Table 15. Even if reheating (thermal sterilization) was conducted, thermal deterioration odor of the milk-containing coffee beverage was effectively reduced by adding a magnesium salt and a potassium salt to the thermally sterilized milk-containing coffee beverage.

[Table 15]

| | | Commercially available product A | | | | Commercially available product B | | | |
|---|---|---|---|---|---|---|---|---|---|
| | | Without | reheating | Reheating | | Without Reheating | | Reheating Reheating | |
| | | No.4-1 | No.4-2 | No.4-3 | No.4-4 | No.4-5 | No.4-6 | No.4-7 | No.4-8 |
| Formulated | Magnesium chloride (g /100 g) | - | 0.08 | - | 0.08 | - | 0.05 | - | 0.05 |
| amount | Potas sium chloride (g /100g) | - | 0.02 | - | 0.02 | - | 0.16 | - | 0.16 |
| | Coffee solid content (%) | 1.53 | 1.53 | 1.53 | 1.53 | 0.82 | 0.82 | 0.82 | 0.82 |
| | Milk solid content (%) | 1.27 | 1.27 | 1.27 | 1.27 | 2.02 | 2.02 | 2.02 | 2.02 |
| Analysis values of component | (A)KwO-pal (mg/100g) | 2.30 | 2.30 | 2.30 | 2.30 | 0.01 | 0.01 | 0.01 | 0.01 |
| | (B)CfO-pal (mg/100g) | 1.70 | 1.70 | 1.70 | 1.70 | 0.01 | 0.01 | 0.01 | 0.01 |
| | Coffee lipid content (A)+ (B) (mg/100g) | 4.00 | 4.00 | 4.00 | 4.00 | 0.02 | 0.02 | 0.02 | 0.02 |
| | Protein content (g /100 g) | 0.60 | 0.60 | 0.60 | 0.60 | 0.60 | 0.60 | 0.60 | 0.60 |
| | Magnesium content (mg /100 g) | 1.20 | 1.70 | 1.20 | 1.70 | 1.70 | 2.50 | 1.70 | 2.50 |
| | Potassium content (mg /100 g) | 90.0 | 91.0 | 90.0 | 91.0 | 90.0 | 91.9 | 90.0 | 91.9 |
| | Chloride ion content (mg /100 q) | 15.0 | 20.3 | 15.0 | 20.3 | 15.0 | 26.3 | 15.0 | 26.3 |
| | Sodium content (mg /100 g) | 45.0 | 45.0 | 45.0 | 45.0 | 49.0 | 49.0 | 49.0 | 49.0 |
| | (C) $\delta$-dodecalactone ($\mu$g /100 g) | 5.3 | 5.3 | 5.3 | 5.3 | 5.2 | 5.2 | 5.2 | 5.2 |
| | (D) $\delta$-tetradecalactone ($\mu$g /100 g) | 11.7 | 11.7 | 11.7 | 11.7 | 9.6 | 9.6 | 9.6 | 9.6 |
| | (C) + (D) ($\mu$g /100 g) | 17.0 | 17.0 | 17.0 | 17.0 | 14.8 | 14.8 | 14.8 | 14.8 |
| | Mg/ Protein [(mg/100a)/(g/100g)] | 2.0 | 2.8 | 2.0 | 2.8 | 2.8 | 4.2 | 2.8 | 4.2 |
| | Mg/Na | 0.03 | 0.04 | 0.03 | 0.04 | 0.03 | 0.05 | 0.03 | 0.05 |
| Sensory valuation (grade) | Strength of thermal deterioration odor | Control | 4 | Control | 5 | Control | 4 | Control | 5 |

**Claims**

1. A thermally sterilized milk-containing coffee beverage comprising milk components and coffee lipids, wherein the coffee beverage satisfies the following (i) and (ii):

   (i) the coffee lipid is kahweol palmitate and/or cafestol palmitate, and the total content of kahweol palmitate and cafestol palmitate in the beverage is 0.01 to 1.30 mg /100 g; and
   (ii) the coffee beverage further includes inorganic salts including a magnesium salt, and a content of magnesium in the beverage is 0.5 to 8.0 mg /100 g.

2. The coffee beverage according to claim 1, wherein the coffee beverage further satisfies at least one of the following (iii) and (iv):

   (iii) the inorganic salts further include a potassium salt, and potassium content in the beverage is 30 to 150 mg /100 g,
   (iv) the inorganic salts further include a chloride, and chloride ion content in the beverage is 5 to 50 mg /100 g.

3. The coffee beverage according to claim 1 or 2, wherein protein content in the beverage is 0.1 to 2.0 g /100 g.

## INTERNATIONAL SEARCH REPORT

| International application No. |
|---|
| **PCT/JP2024/003634** |

### A. CLASSIFICATION OF SUBJECT MATTER

*A23F 5/24*(2006.01)i; *A23L 2/00*(2006.01)i; *A23L 2/38*(2021.01)i; *A23L 2/52*(2006.01)i
FI:  A23F5/24; A23L2/38 P; A23L2/00 B; A23L2/52

According to International Patent Classification (IPC) or to both national classification and IPC

### B. FIELDS SEARCHED

Minimum documentation searched (classification system followed by classification symbols)

A23F5/24; A23L2/00; A23L2/38; A23L2/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2015/030253 A1 (SUNTORY BEVERAGE & FOOD LTD.) 05 March 2015 (2015-03-05)<br>       entire text, in particular, claims<br>   (Family: none) | 1-3 |
| A | JP 2009-297017 A (MORINAGA MILK INDUSTRY CO., LTD.) 24 December 2009 (2009-12-24)<br>       entire text, in particular, example 13<br>   (Family: none) | 1-3 |
| A | GROSS, G. et al. Analysis of the content of the diterpenes cafestol and kahweol in coffee brews. Food Chem. Toxicol. June 1997<br>       entire text, in particular, p. 549, left column, lines 53-56, p. 550, left column, line 9 to p. 551, right column, line 2, p. 552, table 1 | 1-3 |

☑ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 March 2024** | **02 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/003634**

### C. DOCUMENTS CONSIDERED TO BE RELEVANT

| Category* | Citation of document, with indication, where appropriate, of the relevant passages | Relevant to claim No. |
|---|---|---|
| A | SPEER, Karl et al. The lipid fraction of the coffee bean. Brazilian Journal of Plant Physiology. March 2006, vol. 18, no. 1, pp. 201-216, <DOI: 10.1590/S1677-04202006000100014> entire text, in particular, p. 205, left column, line 7 from the bottom to p. 206, upper left column, line 10, p. 207, table 3 | 1-3 |
| A | JP 2006-94856 A (KABUSHIKI KAISHA HAYASHIBARA SEIBUTSU KAGAKU KENKYUJO) 13 April 2006 (2006-04-13) entire text, in particular, paragraph [0013] (Family: none) | 1-3 |
| A | JP 2009-189260 A (MORINAGA MILK INDUSTRY CO., LTD.) 27 August 2009 (2009-08-27) entire text, in particular, claims, paragraphs [0003], [0005], [0006], [0016] (Family: none) | 1-3 |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002186425 A
- JP 2010057435 A
- JP 2009291137 A
- JP 2006094856 A
- WO 2015030253 A